# FASCICULE DE BREVET EUROPEEN

(11) **EP 2 413 233 B1**
(45) Date de publication et mention de la délivrance du brevet: **25.02.2015**
(21) Numéro de dépôt: 11305986.9
(22) Date de dépôt: 28.07.2011
(51) Int. Cl.: G06F 3/06, G06F 9/44

(54) **Téléphone mobile sous android comprenant une chaîne de mise à disposition de contenus**
Android Gerät mit einer Anwendung zum Anzeigen von Inhalten
Android phone with an application for content display

(30) Priorité: 29.07.2010 FR 1056256
(43) Date de publication de la demande: 01.02.2012
(73) Titulaire: Myriad Group AG, 8001 Zürich (CH)
(72) Inventeur: Bandelier, Thomas, 73410 Albens (FR)
(74) Mandataire: Horner, David Richard

(56) Documents cités:
- By Robert Strohmeyer and JR Raphael, PCWorld May 5, 2010 3:00 am: "Manage Files and Documents on Your Android Phone", , 5 mai 2010 (2010-05-05), XP000002657949, Extrait de l'Internet: URL:http://www.pcworld.com/article/191776/ manage_files_and_documents_on_your_android _phone.html [extrait le 2011-08-31]
- mobworld: "Memory Management in Android", , 5 juillet 2010 (2010-07-05), XP000002657950, Extrait de l'Internet: URL:http://mobworld.wordpress.com/2010/07/ 05/memory-management-in-android/ [extrait le 2011-08-31]

## Description

La présente invention concerne un téléphone mobile, géré par une plateforme Android hébergeant des applications, du type comprenant des moyens de stockage de données, divisés en une pluralité de volumes de stockage, chaque volume de stockage comportant au moins une partition, chaque partition de chaque volume de stockage étant adaptée pour stocker des contenus, le téléphone mobile comprenant une chaîne de mise à disposition des contenus stockés dans les volumes de stockage auprès de l'utilisateur, ladite chaîne comprenant :
- des moyens de détection des volumes de stockage ;
- des moyens de lecture des volumes de stockage ;
- des moyens de mise à disposition des contenus auprès des applications ; et
- au moins une application de présentation de contenus.

De tels téléphones mobiles sont connus et sont destinés à remplir différentes fonctions, telles que la téléphonie, la navigation sur Internet, ou la gestion de contenus multimédias. Ces contenus multimédias sont généralement des musiques, des images ou des vidéos, stockés sur une mémoire du téléphone ou accessibles par des moyens de communication réseau.

Afin de pouvoir stocker des contenus multimédias sur le téléphone mobile, la plateforme logicielle Android prévoit une chaîne de mise à disposition des contenus de deux volumes de stockage : la mémoire interne du téléphone et une carte SD. L'utilisateur a ainsi accès aux contenus stockés dans la mémoire interne du téléphone et sur la carte SD, et se voit offert la possibilité d'enregistrer des contenus sur la carte SD.

Toutefois, les systèmes actuels n'offrent pas entière satisfaction. En effet, les cartes SD sont des moyens de stockage de données très spécifiques, or il existe d'autres standards de cartes à mémoire flash qui ne sont pas utilisables sur un téléphone mobile dont le système d'exploitation est Android.

En outre, les téléphones mobiles comportent une carte contenant un micro contrôleur et de la mémoire contenant différentes données de connexion pour l'utilisateur. Cette carte, couramment désignée par UICC pour Universal Integrated Circuit Card, est couramment désignée par l'expression « carte SIM ». De nos jours, apparaissent des cartes SIM, dites multimédia et couramment désignées par l'expression MMSIM, qui intègrent un serveur web et une mémoire de stockage de masse. Or Android n'est pas adapté pour gérer la mémoire de stockage de masse de ces cartes MMSIM.

Un but de l'invention est donc de fournir un téléphone mobile, fonctionnant sous Android, et compatible avec d'autres moyens de stockage de masse que les seules cartes SD.

Le document "Manage Files and Documents on Your Android Phone" (R. Strohmeyer et JR Raphael, PC WORLD, publié le 5 mai 2010) divulgue un système de stockage de données utilisable sur un téléphone mobile Android.

A cet effet, l'invention a pour objet un téléphone mobile du type précité, caractérisé en ce que les moyens de lecture des volumes de stockage comprennent une pluralité de scanners de volumes et en ce que les moyens de mise à disposition des contenus comprennent une pluralité de fournisseurs de contenus, les moyens de détection des volumes de stockage comprenant un unique daemon et un unique programme d'écoute du daemon.

Le téléphone mobile selon l'invention peut également comprendre l'une ou plusieurs des caractéristiques suivantes, prise(s) isolément ou suivant toute(s) combinaison(s) techniquement possible(s) :
- les scanners de volumes comprennent un scanner multi-volumes, adapté pour scanner plusieurs volumes de stockage, et au moins un scanner mono-volume, adapté pour ne scanner qu'un seul volume de stockage ;
- les scanners de volumes comprennent au moins un scanner de partitions sécurisées, adapté pour scanner des partitions cryptées des volumes de stockage ;
- le ou chaque scanner de partitions sécurisées est spécifique à un unique volume de stockage ;
- les fournisseurs de contenus comprennent un fournisseur de contenus multi-volumes, adapté pour mettre à disposition des contenus stockés sur différents volumes, et au moins un fournisseur de contenus mono-volume, adapté pour ne mettre à disposition que des contenus stockés sur un même volume de stockage ;
- les fournisseurs de contenus comprennent au moins un fournisseur de contenus cryptés, adapté pour mettre des contenus cryptés, stockés sur des partitions cryptées des volumes de stockage, à disposition des applications ;
- le ou chaque fournisseur de contenus cryptés est spécifique à un unique volume de stockage ;
- les moyens de mise à disposition des contenus comprennent des bases de données pour stocker des informations recueillies par les scanners de volumes et représentatives des contenus stockés sur les volumes de stockage, les fournisseurs de contenus étant adaptés pour mettre ces informations à disposition des applications, chaque base de données stockant des informations représentatives des contenus stockés sur un même volume de stockage ;
- les bases de données comprennent au moins une base de données sécurisée pour stocker des informations représentatives de contenus cryptés stockés sur des partitions cryptées des volumes de stockage ;
- l'un des volumes de stockage est une mémoire d'une carte SIM multimédia raccordée au téléphone, la carte SIM multimédia intégrant un serveur web et une mémoire de stockage de masse ;
- la carte SIM comporte au moins une partition cryptée pour stocker des données cryptées.

D'autres caractéristiques et avantages de l'invention apparaîtront plus clairement à la lecture de la description qui va suivre, donnée uniquement à titre d'exemple et faire en se référant aux dessins annexés, sur lesquels :
- la Figure 1 est une représentation schématique d'un téléphone mobile selon l'invention ;
- la Figure 2 est un schéma d'une plate-forme logicielle gérant le téléphone de la Figure 1
- la Figure 3 est un schéma d'une chaîne de mise à disposition de contenus du téléphone de la Figure 1 ;
- la Figure 4 est une vue d'un premier affichage du téléphone mobile de la Figure 1 ; et
- la Figure 5 est une vue d'un deuxième affichage du téléphone mobile de la Figure 1.

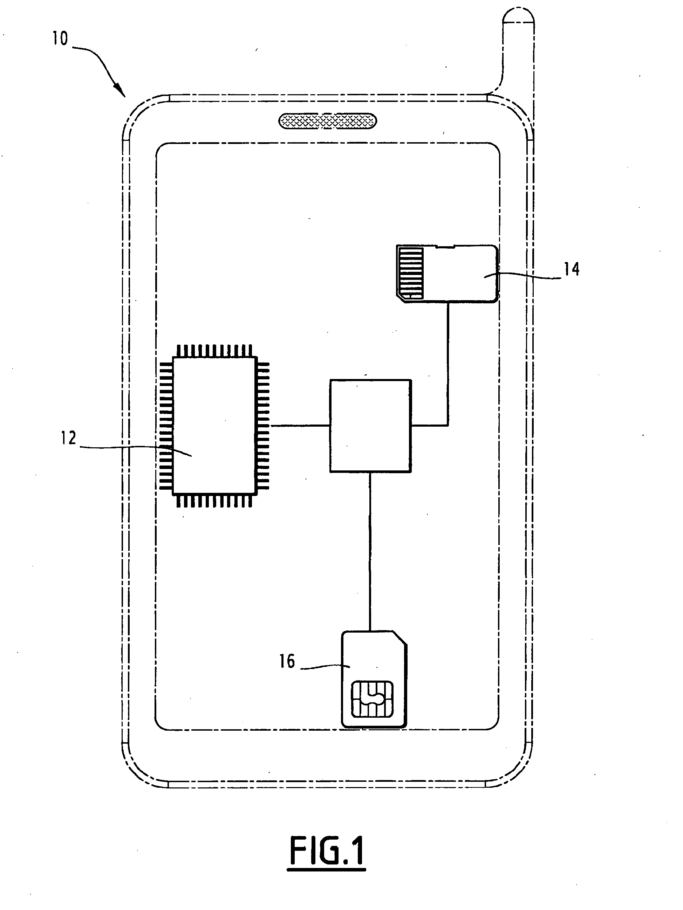

Comme illustré sur la Figure 1, le téléphone selon l'invention met en oeuvre une structure physique 10, composée comme connue en soi d'un processeur, d'une mémoire interne 12 adaptée pour les données et les programmes mis en oeuvre par le processeur, des moyens de communication avec un réseau, ainsi que des moyens de mise à disposition sonores et visuels de contenus reçus par le téléphone ou disponibles dans celui-ci. Il comporte, en outre, une carte SD 14 et une carte SIM multimédia 16, couramment désignée par « MMSIM ».

La carte MMSIM 16 intègre un serveur web et une mémoire de stockage de masse (non représentés).

La mémoire interne 12, la carte SD 14 et la mémoire de la carte MMSIM 16 forment chacun séparément un volume de stockage distinct et constituent ensemble des moyens de stockage de données du téléphone.

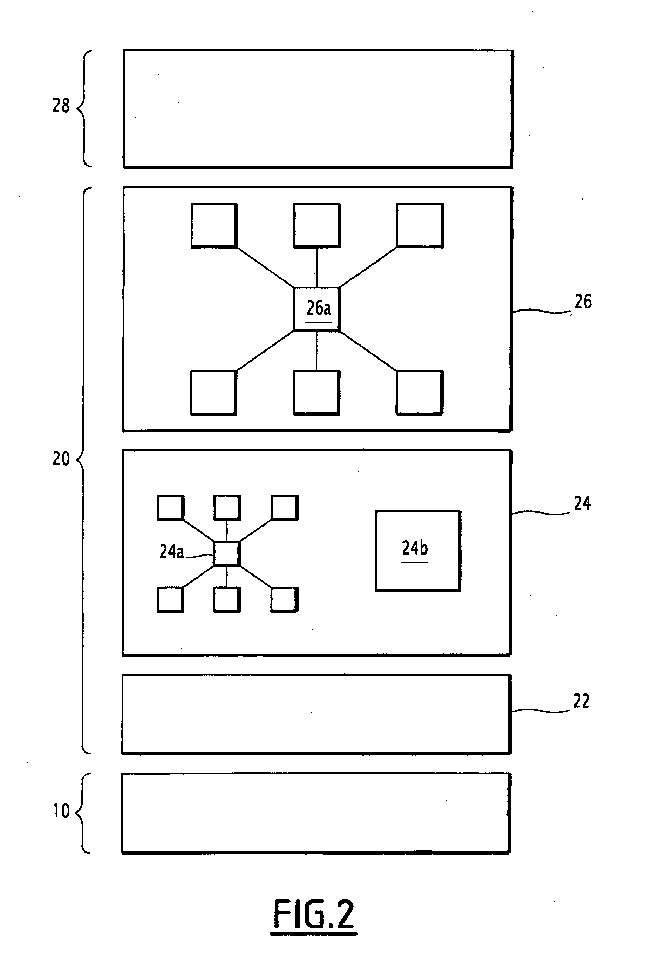

Le téléphone est géré par une plate-forme logicielle Android 20, représentée schématiquement sur la Figure 2. La plate-forme logicielle 20 comprend un noyau 22, une couche native 24 et une couche système 26, appelée « framework » en anglais. Elle fait l'interface entre la structure physique 10 du téléphone et des applications 28.

Le noyau 22 est basé sur la version 2.6 du noyau Linux. Il est adapté pour gérer les services essentiels tels que la sécurité de la plate-forme, la gestion de la mémoire, ou la gestion des processus. Le noyau forme également une couche d'abstraction entre la structure physique 10 du téléphone et la couche native 24.

La couche native 24 est écrite en langage informatique C/C++. Elle comporte des bibliothèques logicielles 24a regroupant un ensemble de fonctions à la disposition des programmes mis en oeuvre par le processeur, ainsi qu'une machine virtuelle 24b adaptée pour mettre en oeuvre des programmes Java.

La couche système 26 est écrite en langage informatique Java. Elle comprend des programmes Java 26a adaptés pour être mis en oeuvre par la machine virtuelle 24b.

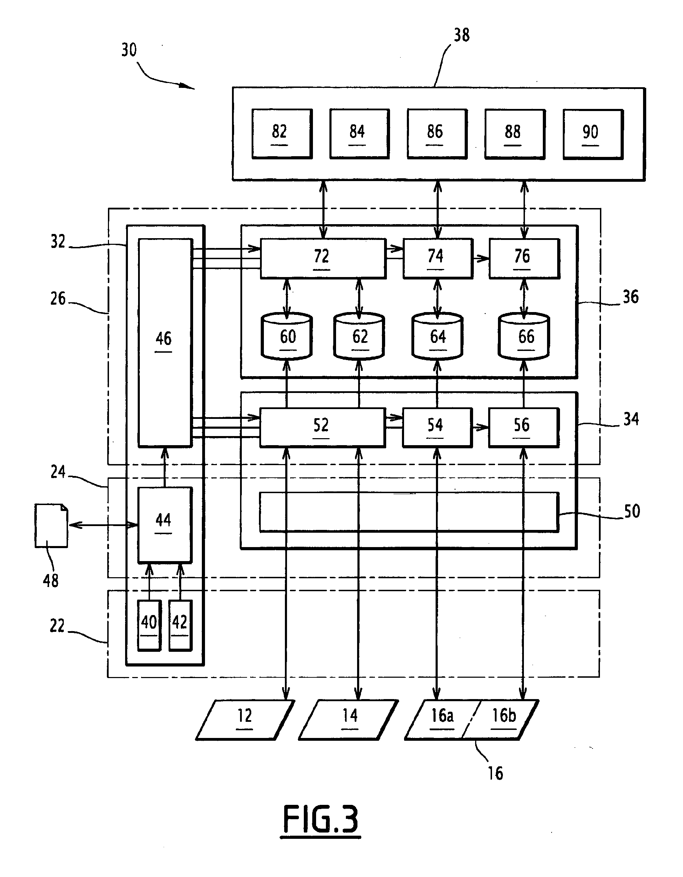

Comme visible sur la Figure 3, la mémoire interne 12 et la carte SD 14 comportent chacune une unique partition et la carte MMSIM 16 comporte une partition non cryptée 16a et une partition cryptée 16b.

Chaque partition de chaque volume de stockage 12, 14, 16 est adaptée pour stocker des contenus, et notamment des contenus multimédias tels que des images, des vidéos ou des musiques.

Le téléphone comprend également une chaîne 30 de mise à disposition de contenus, représentée sur la Figure 3, pour mettre les contenus stockés sur les volumes de stockage 12, 14, 16 à disposition de l'utilisateur du téléphone.

Le chaîne 30 comprend des moyens de détection 32 des volumes de stockage 12, 14, 16, des moyens de lecture 34 des volumes de stockage 12, 14, 16, des moyens de mise à disposition 36 des contenus auprès des applications 28, et une application de présentation des contenus 38.

Les moyens de détection 32 des volumes de stockage 12, 14, 16 comprennent un module de détection de cartes SD 40, un module de détection de cartes MMSIM 42, un daemon 44 et un programme d'écoute 46 du daemon 44.

Les modules de détection de cartes SD 40 et de cartes MMSIM 42 sont installés dans le noyau 22 de la plate-forme Android 20. Le daemon 44 est installé dans la couche native 24 et le programme d'écoute 46 est installé dans la couche système 26.

Le daemon 44 est un programme qui est démarré lors du démarrage du téléphone et demeure actif jusqu'à l'extinction du téléphone.

De manière générale, le daemon 44 est adapté pour communiquer avec le module de détection de cartes SD 40 en utilisant un mécanisme UEVENT pour écouter des informations en provenance du module 40. Le module 40 fournit au daemon 44 des informations de présence de la carte SD 14.

De manière spécifique, le daemon 44 est adapté pour communiquer avec le module de détection de cartes MMSIM 42 en utilisant un mécanisme UEVENT pour écouter des informations en provenance du module 42. Le module 42 fournit au daemon 44 des informations de présence de la carte MMSIM 16.

De plus, le daemon 44 est adapté pour lire au démarrage un fichier de configuration 48 spécifiant les modules de détection qu'il doit écouter. Le fichier de configuration 48 comporte une commande spécifiant que le daemon 44 doit écouter les informations en provenance du module de détection de carte MMSIM 42.

Le daemon 44 est adapté pour commander le montage et le démontage des volumes de stockage 12, 14, 16 en fonction du contenu du fichier de configuration 48, et pour fournir des informations sur le montage et le démontage des volumes de stockage 12, 14, 16 au programme d'écoute 46 via une communication inter processus, généralement connue sous le terme anglais de socket.

Le programme d'écoute 46 est adapté pour notifier des programmes abonnés de la couche système 26 du montage ou du démontage de chacun des volumes de stockage 12, 14, 16.

Les moyens de lecture 34 des volumes de stockage 12, 14, 16 comprennent un module de scannage 50 des volumes de stockage 12, 14, 16 et des scanners de volumes 52, 54, 56.

Le module de scannage 50 est installé dans la couche native 24 de la plate-forme Android 20. Les scanners de volumes 52, 54, 56 sont des programmes Java et sont installés dans la couche système 26.

Les scanners de volumes 52, 54, 56 sont abonnés au programme d'écoute 46 de façon à être notifiés en cas de montage ou de démontage de l'un des volumes de stockage 12, 14, 16.

Chaque scanner de volume 52, 54, 56 est adapté pour scanner au moins une partition d'un volume de stockage 12, 14, 16, au montage dudit volume, en appelant le module de scannage 50, et pour enregistrer des informations recueillies, représentatives des contenus stockés sur la ou chaque partition, dans au moins une base de données 60, 62, 64, 66.

Les scanners de volume 52, 54, 56 comprennent un scanner multi-volumes 52, adapté pour scanner la mémoire interne 12 et la carte SD 14, et deux scanners mono-volume 54, 56, chacun adapté pour ne scanner que la carte MMSIM 16.

Le scanner de volume 56 constitue en outre un scanner de partitions sécurisées, adapté pour scanner spécifiquement la partition cryptée 16b de la carte MMSIM, alors que le scanner de volumes 54 n'est adapté que pour scanner la partition non cryptée 16a.

En variante, le scanner de partitions sécurisées 56 est adapté pour scanner plusieurs partitions cryptées de la carte MMSIM 16.

Le scanner multi-volumes 52 est adapté pour enregistrer les informations représentatives des contenus stockés sur la mémoire interne 12 dans un première base de données 60 et les informations représentatives des contenus stockés sur la carte SD 14 dans une deuxième base de données 62, distincte de la première.

Les scanners mono-volume, respectivement 54, 56, sont adaptés pour stocker les informations représentatives des contenus stockés sur la partition non cryptée 16a, respectivement sur la partition cryptée 16b, dans une troisième 64, respectivement une quatrième 66, base de données.

Les moyens de mise à disposition 36 des contenus auprès des applications 28 comprennent les bases de données 60, 62, 64, 66 et des fournisseurs de contenus 72, 74,76.

Chaque base de données 60, 62, 64, 66 stocke des informations représentatives de contenus stockés sur une même partition d'un volume de stockage 12, 14, 16.

En variante, la base de données 64 est adaptée pour stocker des informations représentatives de contenus stockés sur plusieurs partitions non cryptées de la carte MMSIM 16, et la base de données sécurisée 66 est adaptée pour stocker des informations représentatives de contenus cryptés stockés sur plusieurs partitions cryptées de la carte MMSIM 16.

Chaque fournisseur de contenus 72, 74, 76 est adapté pour lire les informations stockées dans au moins une base de données 60, 62, 64, 66, à laquelle il est associé, et pour mettre celles-ci à disposition des applications 28. Chaque fournisseur de contenus 72, 74, 76 est adapté pour fournir à toute application 28 une liste de contenus stockés sur au moins une partition d'un des volumes de stockage 12, 14, 16, sur la base de critères retenus par l'application 28 et communiqués au fournisseur de contenu 72, 74, 76 via une requête.

Les fournisseurs de contenus 72, 74, 76 comprennent un fournisseur de contenus multi-volumes 72, adapté pour lire les bases de données 60 et 62 et pour mettre à disposition des applications 28 des contenus stockés sur la mémoire interne 12 et sur la carte SD 14.

Les fournisseurs de contenus comprennent également deux fournisseurs de contenus mono-volumes, respectivement 74, 76, adaptés pour ne lire chacun qu'une unique base de données, respectivement 64, 66, et pour ne mettre à disposition des applications 28 que les contenus de la carte MMSIM 16.

Le fournisseur de contenus 76 constitue en outre un fournisseur de contenu sécurisé, adapté pour lire la base de données sécurisée 66 et pour mettre à disposition des applications 28 les contenus de la partition cryptée 16b, alors que le fournisseur de contenus 74 n'est adapté que pour mettre à disposition des applications 28 les contenus de la partition non cryptée 16a.

Chaque fournisseur de contenus 72, 74, 76 est adapté pour masquer le contenu de la ou de chaque base de données, respectivement 60, 62, 64, 66, à laquelle il est associé aux applications 28, lorsque la ou chaque partition ou volume de stockage associé, respectivement 12, 14, 16a, 16b, est débranché. En particulier, le fournisseur de contenus sécurisé 76 est adapté pour effacer le contenu de la base de données sécurisée 66 lorsque la partition 16b est débranchée.

A cet effet, chaque fournisseur de contenu 72, 74, 76 est abonné au programme d'écoute 46 de façon à être notifié en cas de montage ou de démontage de l'un des volumes de stockage 12, 14, 16.

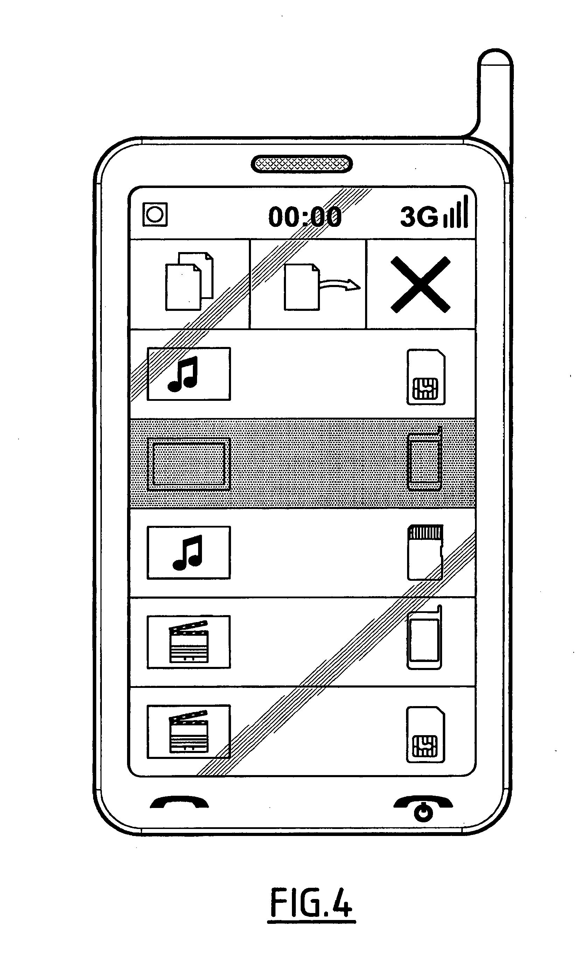

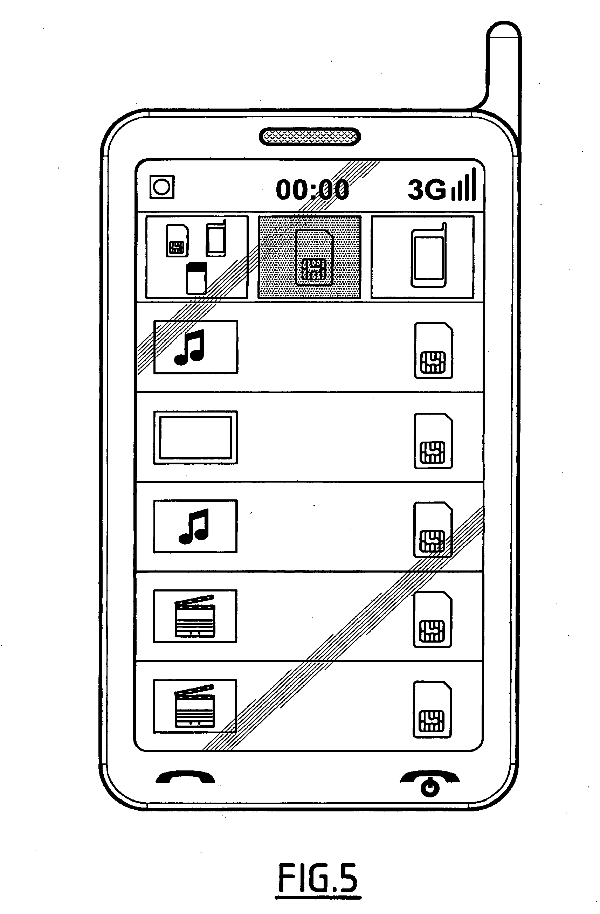

Deux écrans d'affichage de l'application de présentation des contenus 38 sont représentés sur les Figures 4 et 5.

L'application de présentation des contenus 38 comprend notamment une fonction de gestion des contenus multimédias 82 et une fonction de gestion des volumes de stockage 84. Elle comprend également une fonction de lecture de musiques 86, une fonction de lecture d'images 88 et une fonction de lecture de vidéos 90.

La fonction de gestion des contenus multimédias 82 permet à l'utilisateur de copier ou de déplacer un contenu à l'intérieur d'une même partition ou d'une partition vers une autre partition ou d'un volume de stockage vers un autre volume de stockage. Elle permet également à l'utilisateur de supprimer un contenu, ou de le renommer.

De façon connue, la fonction 82 est adaptée pour, lors de la copie, du déplacement, de la suppression ou du renommage d'un contenu, modifier les données stockées sur le ou chaque volume de stockage 12, 14, 16 concerné. Elle est également adaptée pour mettre à jour simultanément la ou chaque base de données 60, 62, 64, 66 concernée.

La fonction de gestion des volumes de stockage 84 permet à l'utilisateur de choisir entre un mode de présentation dans lequel les contenus stockés sur différents volumes de stockage sont tous présentés simultanément, comme représenté sur la Figure 4, ou un mode de présentation où seuls les contenus stockés sur un même volume de stockage sont présentés, comme représenté sur la Figure 5, où seuls les contenus stockés sur la carte MMSIM 16 sont affichés. Elle est également adaptée pour ne présenter que les contenus multimédias répondant à certains critères choisis par l'utilisateur.

La fonction 84 est ainsi adaptée pour envoyer des requêtes aux fournisseurs de contenus 72, 74, 76 spécifiant les critères de présentation retenus par l'utilisateur.

Les fonctions de lecture de musiques 86, de lecture d'images 88 et de lecture de vidéos 90 font appel aux bibliothèques standards d'Android.

Le procédé de fonctionnement du téléphone mobile selon l'invention va maintenant être décrit.

Le téléphone mobile est démarré. Au cours du démarrage, le daemon 44 lit le fichier de configuration 48 et charge les bibliothèques adaptées pour l'écoute des informations en provenance du module de détection de cartes MMSIM 42.

La carte MMSIM 16 est insérée dans le téléphone. Une notification émise par le module 42 informe alors le daemon 44, par un mécanisme UEVENT, de la présence de la carte MMSIM 16. Le daemon 44 commande alors le montage de la partition de la carte MMSIM 16 en fonction du contenu du fichier de configuration 48. Le daemon 44 informe alors le programme d'écoute 46 du montage de la carte MMSIM 16 par l'envoi d'un message via une communication inter processus généralement connue sous le terme anglais de socket.

Le programme d'écoute 46 notifie alors les scanners de médias 54, 56, et les fournisseurs de contenus 74, 76, du montage de la carte MMSIM 16. Les scanners de médias 54, 56 appellent alors le module de scannage 50 pour scanner les partitions 16a et 16b de la carte MMSIM 16. Chaque scanner de médias, respectivement 54, 56, compare les informations recueillies lors du scan de la partition non cryptée 16a, respectivement de la partition cryptée 16b, avec les informations éventuellement stockées dans la base de données respective, respectivement 64, 66, et enregistre dans la base de données respective, respectivement 64, 66, de nouvelles informations représentatives des contenus stockés sur la partition scannée, respectivement 16a, 16b, informations ne figurant pas préalablement dans la base de données respective, respectivement 64, 66.

En variante, la carte MMSIM 16 est déjà insérée lors du démarrage du téléphone. Les étapes décrites ci-dessus ont alors lieu lors du démarrage du téléphone.

L'utilisateur peut alors lancer l'application de présentation de contenus 38. Lors de ce lancement, l'application de présentation de contenus 38 envoie une requête aux fournisseurs de contenus 72, 74, 76 qui lui retournent chacun une liste des contenus dont les informations sont stockées dans leurs bases de données 60, 62, 64, 66. L'application de présentation de contenus 38 agrège ces listes en une liste unifiée qu'elle met à disposition de l'utilisateur, via les moyens de mise à disposition visuelle.

L'utilisateur peut alors, via la fonction de gestion des contenus 82, copier, déplacer, supprimer ou renommer un contenu stocké sur une partition de l'un des volumes de stockage 12, 14, 16.

A titre d'exemple, lors du déplacement d'un contenu de la carte SD 14 vers la partition non cryptée 16a de la carte MMSIM 16, de façon connue, les données stockées sur la carte SD 14 sont copiées vers la carte MMSIM 16 puis supprimées de la carte SD 14. Simultanément, la fonction 82 notifie le fournisseur de contenus 72 associé à la carte SD 14 et le fournisseur de contenus 74 associé à la carte MMSIM 16 du changement intervenu. Chaque fournisseur de contenu, respectivement 72, 74, met alors la base de données associée, respectivement 62, 64, à jour.

La fonction de gestion des volumes 84 permet en outre à l'utilisateur de choisir le mode de présentation des contenus. Ainsi, si l'utilisateur choisit par exemple de ne voir que les contenus stockés sur la carte MMSIM 16, la fonction de gestion des volumes 84 retire les contenus issus de la liste fournie par le fournisseur de contenus 72 associé aux autres volumes de stockage 12, 14. Si l'utilisateur choisit en revanche de n'afficher que les musiques composées par un certain artiste, la fonction de gestion de volumes 84 envoie une nouvelles requête aux fournisseurs de contenus 72, 74, 76 pour qu'ils retournent à l'application 38 des listes contenant les seuls contenus répondant aux critères spécifiés.

Lors de l'éjection de la carte MMSIM 16, une notification émise par le module de détection de carte MMSIM 42 informe alors le daemon 44, par un mécanisme UEVENT, de l'éjection de la carte MMSIM 16. Le daemon 44 commande alors le démontage de la carte MMSIM 16 et informe le programme d'écoute 46 du démontage de la carte MMSIM 16 par l'envoi d'un message sur une socket.

Le programme d'écoute 42 notifie les fournisseurs de contenus 74, 76 du démontage de la carte MMSIM 16. Le fournisseur de contenus MMSIM 62 ferme alors sa base de données MMSIM 72 de façon à la rendre invisible pour les applications 28. Dans le même temps, le fournisseur de contenus sécurisé 76 efface le contenu de sa base de données sécurisée 66.

Le mode de réalisation ici décrit constitue un mode de réalisation préféré de l'invention. Toutefois, le téléphone mobile selon l'invention peut aussi supporter d'autres volumes de stockage, tels que des cartes MMC, sans sortir du cadre de l'invention. La carte MMSIM peut également être remplacée par un autre type de carte à mémoire flash. La carte MMSIM peut comporter une pluralité de partitions sécurisées. La carte SD peut également comporter au moins une partition sécurisée.

Grâce à l'invention, un téléphone mobile géré par une plateforme Android peut gérer des contenus stockés sur des volumes de stockage autres qu'une carte SD et stockés sur une pluralité de volumes de stockage.

En outre, les modifications apportées à la plate-forme d'origine permettent une exécution des opérations dans un délai optimal et sont compatibles avec les évolutions de la plateforme Android.

Enfin, le téléphone remplit davantage de fonctions, accessibles à l'utilisateur au sein d'une interface unifiée, ce qui permet une utilisation simplifiée du téléphone par l'utilisateur.

## Revendications

1. Téléphone mobile, géré par une plateforme Android (20) hébergeant des applications (28), le téléphone mobile comportant des moyens de stockage de données (12, 14, 16), divisés en une pluralité de volumes de stockage (12, 14, 16), chaque volume de stockage comportant au moins une partition, chaque partition de chaque volume de stockage (12, 14, 16) étant adaptée pour stocker des contenus, le téléphone mobile comprenant une chaîne (30) de mise à disposition des contenus stockés dans les volumes de stockage (12, 14, 16) auprès de l'utilisateur, ladite chaîne (30) comprenant :
- des moyens de détection (32) des volumes de stockage (12, 14, 16) ;
- des moyens de lecture (34) des volumes de stockage (12, 14, 16) ;
- des moyens de mise à disposition (36) des contenus auprès des applications (28) ; et
- au moins une application de présentation de contenus (38) ;
**caractérisé en ce que** les moyens de lecture (34) des volumes de stockage (12, 14, 16) comprennent une pluralité de scanners de volumes (52, 54, 56) et **en ce que** les moyens de mise à disposition (36) des contenus comprennent une pluralité de fournisseurs de contenus (72, 74, 76), les moyens de détection (32) des volumes de stockage (12, 14, 16) comprenant un unique daemon (44) et un unique programme d'écoute (46) du daemon (44).

2. Téléphone mobile selon la revendication 1, **caractérisé en ce que** les scanners de volumes (52, 54, 56) comprennent un scanner multi-volumes (52), adapté pour scanner plusieurs volumes de stockage (12, 14), et au moins un scanner mono-volume (54, 56), adapté pour ne scanner qu'un seul volume de stockage (16).

3. Téléphone mobile selon la revendication 1 ou 2, **caractérisé en ce que** les scanners de volumes (52, 54, 56) comprennent au moins un scanner de partitions sécurisées (56), adapté pour scanner des partitions cryptées (16b) des volumes de stockage (12, 14, 16).

4. Téléphone mobile selon la revendication 3, **caractérisé en ce que** le ou chaque scanner de partitions sécurisées (56) est spécifique à un unique volume de stockage (16).

5. Téléphone mobile selon l'une quelconque des revendications précédentes, **caractérisé en ce que** les fournisseurs de contenus (72, 74, 76) comprennent un fournisseur de contenus multi-volumes (72), adapté pour mettre à disposition des contenus stockés sur différents volumes (12, 14), et au moins un fournisseur de contenus mono-volume (74, 76), adapté pour ne mettre à disposition que des contenus stockés sur un même volume de stockage (16).

6. Téléphone mobile selon l'une quelconque des revendications précédentes, **caractérisé en ce que** les fournisseurs de contenus (72, 74, 76) comprennent au moins un fournisseur de contenus cryptés (76), adapté pour mettre des contenus cryptés, stockés sur des partitions cryptées (16b) des volumes de stockage (12, 14, 16), à disposition des applications (28).

7. Téléphone mobile selon la revendication 6, **caractérisé en ce que** le ou chaque fournisseur de contenus cryptés (76) est spécifique à un unique volume de stockage (16).

8. Téléphone mobile selon l'une quelconque des revendications précédentes, **caractérisé en ce que** les moyens de mise à disposition (36) des contenus comprennent des bases de données (60, 62, 64, 66) pour stocker des informations recueillies par les scanners de volumes (52, 54, 56) et représentatives des contenus stockés sur les volumes de stockage (12, 14, 16), les fournisseurs de contenus (72, 74, 76) étant adaptés pour mettre ces informations à disposition des applications (28), chaque base de données (60, 62, 64, 66) stockant des informations représentatives des contenus stockés sur un même volume de stockage (12, 14, 16).

9. Téléphone mobile selon la revendication 8, **caractérisé en ce que** les bases de données (60, 62, 64, 66) comprennent au moins une base de données sécurisée (66) pour stocker des informations représentatives de contenus cryptés stockés sur des partitions cryptées (16b) des volumes de stockage (12, 14, 16).

10. Téléphone mobile selon l'une quelconque des revendications précédentes, **caractérisé en ce que** l'un des volumes de stockage (12, 14, 16) est une mémoire d'une carte SIM multimédia (16) raccordée au téléphone, la carte SIM multimédia (16) intégrant un serveur web et une mémoire de stockage de masse.

11. Téléphone mobile selon la revendication 10, **caractérisé en ce que** la carte SIM (16) comporte au moins une partition cryptée (16b) pour stocker des données cryptées.

## Patentansprüche

1. Mobiltelefon, das durch eine Android-Plattform (20), die Applikationen (28) umfasst, verwaltet wird, wobei das Mobiltelefon Mittel zur Datenspeicherung (12, 14, 16) umfasst, die in eine Vielzahl von Speichervolumina (12, 14, 16) unterteilt sind, wobei jedes Speichervolumen mindestens einen Teilbereich umfasst, wobei jeder Teilbereich jedes Speichervolumens (12, 14, 16) dazu vorgesehen ist, Inhalte zu speichern, wobei das Mobiltelefon eine Anwendung (30) zum Anzeigen der in den Speichervolumina (12, 14, 16) gespeicherten Inhalte für den Benutzer umfasst, wobei die Anwendung (30) umfasst:
- Mittel zur Erfassung (32) der Speichervolumina (12, 14, 16);
- Mittel zum Lesen (34) der Speichervolumina (12, 14, 16);
- Mittel zum Anzeigen (36) der Inhalte bei den Applikationen (28); und
- mindestens eine Applikation zur Darstellung von Inhalten (38);
**dadurch gekennzeichnet, dass** die Mittel zum Lesen (34) der Speichervolumina (12, 14, 16) eine Vielzahl von Volumenscannern (52, 54, 56) umfassen, und dass die Mittel zum Anzeigen (36) der Inhalte eine Vielzahl von Inhaltsausgebern (72, 74, 76) umfassen, wobei die Mittel zur Erfassung (32) der Speichervolumina (12, 14, 16) einen einzigen Daemon (44) und ein einziges Programm zum Abhören (46) des Daemons (44) umfassen.

2. Mobiltelefon nach Anspruch 1, **dadurch gekennzeichnet, dass** die Volumenscanner (52, 54, 56) einen Multivolumenscanner (52), der dazu vorgesehen ist, mehrere Speichervolumina (12, 14) zu scannen, und mindestens einen Monovolumenscanner (54, 56) umfassen, der dazu vorgesehen ist, nur ein Speichervolumen (16) zu scannen.

3. Mobiltelefon nach Anspruch 1 oder 2, **dadurch gekennzeichnet, dass** die Volumenscanner (52, 54, 56) mindestens einen Scanner von gesicherten Teilbereichen (56) umfassen, der dazu vorgesehen ist, verschlüsselte Teilbereiche (16b) der Speichervolumina (12, 14, 16) zu scannen.

4. Mobiltelefon nach Anspruch 3, **dadurch gekennzeichnet, dass** der oder jeder Scanner von gesicherten Teilbereichen (56) für ein einziges Speichervolumen (16) spezifisch ist.

5. Mobiltelefon nach einem der vorhergehenden Ansprüche, **dadurch gekennzeichnet, dass** die Inhaltsausgeber (72, 74, 76) einen Multivolumen-Inhaltsausgeber (72), der dazu vorgesehen ist, auf verschiedenen Volumina (12, 14) gespeicherte Inhalte anzuzeigen, und mindestens einen Monovolumen-Inhaltsausgeber (74, 76) umfassen, der dazu vorgesehen ist, nur in einem selben Speichervolumen (16) gespeicherte Inhalte anzuzeigen.

6. Mobiltelefon nach einem der vorhergehenden Ansprüche, **dadurch gekennzeichnet, dass** die Inhaltsausgeber (72, 74, 76) mindestens einen Ausgeber von verschlüsselten Inhalten (76) umfassen, der dazu vorgesehen ist, verschlüsselte, in verschlüsselten Teilbereichen (16b) der Speichervolumina (12, 14, 16) gespeicherte Inhalte den Applikationen (28) zur Verfügung zu stellen.

7. Mobiltelefon nach Anspruch 6, **dadurch gekennzeichnet, dass** der oder jeder Ausgeber von verschlüsselten Inhalten (76) für ein einziges Speichervolumen (16) spezifisch ist.

8. Mobiltelefon nach einem der vorhergehenden Ansprüche, **dadurch gekennzeichnet, dass** die Mittel zum Anzeigen (36) der Inhalte Datenbasen (60, 62, 64, 66) umfassen, um Informationen zu speichern, die von den Volumenscannern (52, 54, 56) gesammelt werden und für die in den Speichervolumina (12, 14, 16) gespeicherten Inhalte repräsentativ sind, wobei die Inhaltsausgeber (72, 74, 76) dazu vorgesehen sind, diese Informationen den Applikationen (28) zur Verfügung zu stellen, wobei jede Datenbasis (60, 62, 64, 66) Informationen speichert, die für die in einem selben Speichervolumen (12, 14, 16) gespeicherten Inhalte repräsentativ sind.

9. Mobiltelefon nach Anspruch 8, **dadurch gekennzeichnet, dass** die Datenbasen (60, 62, 64, 66) mindestens eine gesicherte Datenbasis (66) umfassen, um Informationen zu speichern, die für verschlüsselte Inhalte repräsentativ sind, die in verschlüsselten Teilbereichen (16b) der Speichervolumina (12, 14, 16) gespeichert sind.

10. Mobiltelefon nach einem der vorhergehenden Ansprüche, **dadurch gekennzeichnet, dass** eines der Speichervolumina (12, 14, 16) ein Speicher einer Multimedia-SIM-Karte (16) ist, die an das Telefon angeschlossen ist, wobei die Multimedia-SIM-Karte (16) einen Web-Server und einen Massespeicher umfasst.

11. Mobiltelefon nach Anspruch 10, **dadurch gekennzeichnet, dass** die SIM-Karte (16) mindestens einen verschlüsselten Teilbereich (16b) umfasst, um verschlüsselte Daten zu speichern.

## Claims

1. Mobile telephone, managed by an android platform (20) hosting applications (28), the mobile telephone comprising data storage means (12, 14, 16), divided into a plurality of storage volumes (12, 14, 16), each storage volume comprising at least one partition, each partition of each storage volume (12, 14, 16) being suitable for storing contents, the mobile telephone comprising a chain (30) for supplying contents stored in the storage volumes (12, 14, 16) to the user, said chain (30) comprising:
- means (32) for detecting the storage volumes (12, 14, 16);
- means (34) for reading the storage volumes (12, 14, 16);
- means (36) for providing content to applications (28); and
- at least one content presentation application (38);
**characterized in that** the means (34) for reading the storage volumes (12, 14, 16) comprise a plurality of volume scanners (52, 54, 56) and **in that** the means (36) for providing contents comprise a plurality of content suppliers (72, 74, 76), the means (32) for detecting the storage volumes (12, 14, 16) comprising a single demon (44) and a single programme (46) for listening to the demon (44).

2. Mobile telephone according to Claim 1, **characterized in that** the volume scanners (52, 54, 56), comprise a multi-volume scanner (52), suitable for scanning a plurality of storage volumes (12, 14), and at least one single-volume scanner (54, 56), suitable for scanning only one single storage volume (16).

3. Mobile telephone according to Claim 1 or 2, **characterized in that** the volume scanners (52, 54, 56) comprise at least one secured partition scanner (56), suitable for scanning encrypted partitions (16b) of the storage volumes (12, 14, 16).

4. Mobile telephone according to Claim 3, **characterized in that** the or each secured partition scanner (56) is specific to a single storage volume (16).

5. Mobile telephone according to any one of the preceding claims, **characterized in that** the content suppliers (72, 74, 76) comprise a multi-volume content supplier (72), suitable for providing contents stored on different volumes (12, 14), and at least one single-volume content supplier (74, 76), suitable for providing only contents stored on one and the same storage volume (16).

6. Mobile telephone according to any one of the preceding claims, **characterized in that** the content suppliers (72, 74, 76) comprise at least one encrypted content supplier (76), suitable for making encrypted contents stored on encrypted partitions (16b) of the storage volumes (12, 14, 16), available to the applications (28).

7. Mobile telephone according to Claim 6, **characterized in that** the or each encrypted content supplier (76) is specific to a single storage volume (16).

8. Mobile telephone according to any one of the preceding claims, **characterized in that** the means (36) for providing contents comprise databases (60, 62, 64, 66) for storing information collected by the volume scanners (52, 54, 56) and representative of the contents stored on the storage volumes (12, 14, 16), the content suppliers (72, 74, 76) being suitable for making this information available to the applications (28), each database (60, 62, 64, 66) storing information representative of the contents stored on one and the same storage volume (12, 14, 16).

9. Mobile telephone according to Claim 8, **characterized in that** the databases (60, 62, 64, 66) comprise at least one secured database (66) for storing information representative of encrypted contents stored on encrypted partitions (16b) of the storage volumes (12, 14, 16).

10. Mobile telephone according to any one of the preceding claims, **characterized in that** one of the storage volumes (12, 14, 16) is a memory of a multimedia sim card (16) connected to the telephone, the multimedia sim card (16) incorporating a web server and a mass storage memory.

11. Mobile telephone according to Claim 10, **characterized in that** the sim card (16) comprises at least one encrypted partition (16b) for storing encrypted data.
